# EUROPEAN PATENT APPLICATION

(11) **EP 1 541 969 A1**
(43) Date of publication of application: **15.06.2005**
(21) Application number: 04078260.9
(22) Date of filing: 01.12.2004
(51) Int. Cl.: G01C 21/36

(54) **Route sequence viewing in navigation system**

(30) Priority: 11.12.2003 US 732971
(71) Applicant: Delphi Technologies, Inc., Troy, MI 48007 (US)
(72) Inventor: Sencaj, Randall W., Carmel, IN 46032 (US); Kady, Mark A, Greentown, I 46936 (US); Chenertsky, Victor V., Kokomo, IN 46902 (US); Triantafyllopoulos, Spiros, Carmel, IN 46032 (US); Kiel, Daniel D., Indianapolis, IN 46260 (US); Cui, Dehua, Northville,MI 48167 (US)
(74) Representative: Denton, Michael John

(57) **Abstract**

A vehicle navigation system uses a simple graphic user interface (GUI) to display a route formed by a sequence of route segments. At any given time, the vehicle navigation system displays a single route segment, defined either as the distance between consecutive turn points or as a fixed distance. The vehicle navigation system also displays a graphic representation of the vehicle. The user can scroll backward and forward through the sequence of route segments using a simple control, such as a knob or a keypad. As a result, the user can view the entire route easily without having to mentally adjust to different frames of reference, such as between an overview map and a detailed map.

## Description

### Technical Field

The disclosure relates generally to vehicle navigation systems. More particularly, the disclosure relates to graphic user interfaces for use in connection with vehicle navigation systems.

### Background of the Invention

An increasing number of vehicles are equipped with on-board navigation systems that display the position of the vehicle and surrounding streets, intersections, and other points of interest. Some navigation systems allow the driver to input or program a route. The navigation system then displays the position of the vehicle along the route.

For many conventional vehicle navigation systems, the ability to display the entire route is limited by the size of the display and by the manner in which the map or route is displayed. The user can view the route either as a list of maneuvers or on a relatively large-scale overview map. When viewing the route as a list of maneuvers, the user may find it difficult to follow the entire list, particularly when the list includes many maneuvers and occupies several pages. On the other hand, when displaying the route on the overview map, the display may not show detailed information such as street names, particularly if the display is relatively small. The user must then "zoom in" on the map to see this detailed information. This more detailed view, however, displays a smaller area of the map. As a result, the user cannot see the entire route without "zooming out" to the overview map again. Interacting with the interface in this way requires the driver to mentally adjust to a different frame of reference, *i.e.,* between the overview map and the detailed view, and can distract the driver.

### Summary of the Disclosure

According to various example implementations, a vehicle navigation system displays a route formed by a sequence of route segments using a simple graphic user interface (GUI). More particularly, at any given time, the vehicle navigation system displays a single route segment. The route segment may be defined either as the distance between consecutive turn points or as a fixed distance. A graphic representation of the vehicle is also displayed. The user can scroll through the sequence of route segments using a simple control, such as a knob or a keypad.

In one implementation, a route comprising a sequence of route segments to be traveled by a vehicle is displayed. A position of the vehicle is determined. A route segment on which the vehicle is located is then identified as a function of the position of the vehicle. The identified route segment is rendered using a graphic user interface (GUI). A different one of the route segments is rendered using the GUI in response to a user input.

In another implementation, a route comprising a sequence of route segments to be traveled by a vehicle is displayed by displaying a graphic representation of the vehicle and a route segment on which the vehicle is located using a graphic user interface (GUI). A user input is received. A previous route segment or a subsequent route segment is displayed using the GUI in response to the user input.

Another implementation is directed to a navigation system for use in a vehicle. The navigation system includes a display device and a global positioning system (GPS) receiver configured to determine a position of the vehicle. A data retrieval device is configured to retrieve navigation data from a data storage medium. The navigation data represents a sequence of route segments. A processor-based subsystem is operatively coupled to the GPS receiver, the data retrieval device, and the display device. The processor-based subsystem is configured to determine a position of the vehicle and identify a route segment on which the vehicle is located as a function of the position of the vehicle. The processor-based system is also configured to render the identified route segment using a graphic user interface (GUI) and to render a different one of the route segments using the GUI in response to a user input.

Yet another implementation is directed to a navigation system for use in a vehicle. The navigation system includes a display device and an input device. A global positioning system (GPS) receiver is configured to determine a position of the vehicle. A data retrieval device is configured to retrieve navigation data from a data storage medium. The navigation data represents a sequence of route segments. A processor-based subsystem is operatively coupled to the GPS receiver, the data retrieval device, the display device, and the input device. The processor-based subsystem is configured to display a graphic representation of the vehicle and a route segment on which the vehicle is located using a graphic user interface (GUI) and to receive a user input using the input device. The processor-based subsystem is also configured to display one of a previous route segment and a subsequent route segment using the GUI in response to the user input.

In another implementation, a processor-readable medium contains processor-executable instructions that, when executed by a processor-based system in a vehicle, cause the processor-based system to determine a position of the vehicle and to retrieve route information representing a route comprising a sequence of route segments. The processor-based system then identifies a route segment on which the vehicle is located as a function of the position of the vehicle. The identified route segment is rendered using a graphic user interface (GUI). A different one of the route segments is rendered using the GUI in response to a user input.

In still another implementation, a processor-readable medium containing processor-executable instructions that, when executed by a processor-based system in a vehicle, cause the processor-based system to retrieve route information representing a route comprising a sequence of route segments. The processor-based system displays a graphic representation of the vehicle and a route segment on which the vehicle is located using a graphic user interface (GUI) and receives a user input. The processor-based system displays one of a previous route segment and a subsequent route segment using the GUI in response to the user input.

Various implementations may provide certain advantages. The navigation system displays only a single route segment at a time. The user can scroll backward and forward through the sequence of route segments using a simple control. As a result, the user can view the entire route easily without having to mentally adjust to different frames of reference, such as between an overview map and a detailed map.

Additional advantages and features will become apparent from the following description and the claims that follow, considered in conjunction with the accompanying drawings.

### Brief Description of the Drawings

Figure 1 is a block diagram depicting a vehicle navigation system according to an embodiment.
Figure 2 is a flow diagram illustrating a method of displaying a route according to another embodiment.
Figure 3 illustrates an example route comprising a sequence of route segments.
Figure 4 illustrates an example sequence of graphic user interface (GUI) screens that may be presented to the user to display the route depicted in Figure 3.

### Detailed Description of Various Embodiments

A vehicle navigation system uses a simple graphic user interface (GUI) to display a route formed by a sequence of route segments. At any given time, the vehicle navigation system displays a single route segment, defined either as the distance between consecutive turn points or as a fixed distance. The vehicle navigation system also displays a graphic representation of the vehicle. The user can scroll backward and forward through the sequence of route segments using a simple control, such as a knob or a keypad. As a result, the user can view the entire route easily without having to mentally adjust to different frames of reference, such as between an overview map and a detailed map.

The following description of various embodiments implemented in a vehicle navigation system is to be construed by way of illustration rather than limitation. This description is not intended to limit the invention or its applications or uses. For example, while various embodiments are described as being implemented in a vehicle navigation system, it will be appreciated that the principles described herein may be applicable to navigation systems operable in other environments.

In the following description, numerous specific details are set forth in order to provide a thorough understanding of various embodiments. It will be apparent to one skilled in the art that the present invention may be practiced without some or all of these specific details. In other instances, well known components and process steps have not been described in detail in order to avoid unnecessarily obscuring the present invention.

Various embodiments may be described in the general context of processor-executable instructions, such as program modules, being executed by a processor. Generally, program modules include routines, programs, objects, components, data structures, *etc.,* that perform particular tasks or implement particular abstract data types. In addition, some embodiments may also be practiced in distributed processing environments in which tasks are performed by remote processing devices that are linked through a communications network or other data transmission medium. In a distributed processing environment, program modules and other data may be located in both local and remote storage media, including memory storage devices.

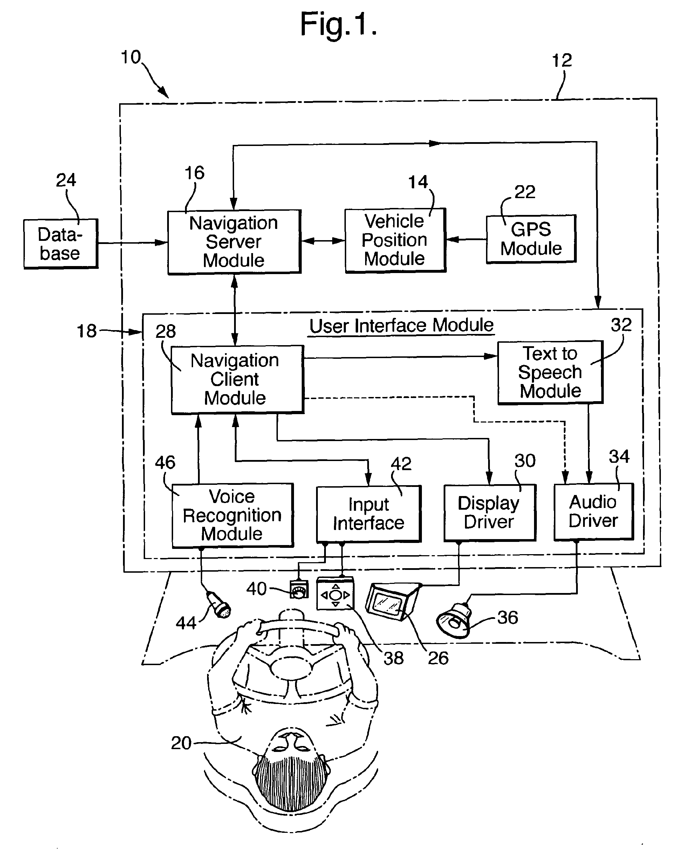

Referring now to the drawings, Figure 1 illustrates a vehicle navigation system 10. The vehicle navigation system 10 includes a processor-based system comprising a processor 12 configured to execute a number of software modules, including a vehicle position module 14, a navigation server module 16, and a user interface module 18. As described below, the processor 12 may interface with a user 20 via one or more input and output devices controlled by the user interface module 18. The user 20 can be the driver of the vehicle or, alternatively, a passenger.

The processor 12 is typically configured to operate with one or more types of processor readable media. Processor readable media can be any available media that can be accessed by the processor 12 and includes both volatile and nonvolatile media, removable and non-removable media. By way of example, and not limitation, processor readable media may include storage media and communication media. Storage media includes both volatile and nonvolatile, removable and nonremovable media implemented in any method or technology for storage of information such as processor-readable instructions, data structures, program modules, or other data. Storage media includes, but is not limited to, RAM, ROM, EEPROM, flash memory or other memory technology, CD-ROM, digital versatile discs (DVDs) or other optical disc storage, magnetic cassettes, magnetic tape, magnetic disk storage or other magnetic storage devices, or any other medium that can be used to store the desired information and that can be accessed by the processor 12. Communication media typically embodies processor-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also intended to be included within the scope of processor-readable media.

The vehicle position module 14 determines the location of the vehicle, for example, by obtaining data from a GPS module 22. Alternatively, the vehicle position module 14 may determine the location of the vehicle in another way, such as by measuring the distance and direction traveled from a known reference point. In addition to the location of the vehicle, the vehicle position module 14 may also determine the direction of travel of the vehicle. The vehicle position module 14 may determine the direction of travel using any of a variety of conventional techniques.

The vehicle position module 14 provides the location and direction of travel information to the navigation server module 16. The navigation server module 16 uses this information in combination with navigation data to determine where the vehicle is located relative to a route formed by a sequence of route segments. The navigation data may include, for example, map data, a list of turn maneuvers, or both, as well as other information pertinent to the route. Any or all of this information may be contained in a database 24. The database 24 may be stored in any of a variety of processor-readable media, including, for example, optical discs including CD-ROMs and DVD-ROMs, memory cards, and the like.

When the navigation server module 16 has identified the route segment on which the vehicle is located, the navigation server module 16 displays the identified route segment using a display screen 28 controlled via the user interface module 18. The display screen 26 is typically part of a vehicle information system, but may be implemented as a standalone display screen.

In the embodiment shown in Figure 1, the navigation server module 16 provides information regarding the route segment on which the vehicle is located to a navigation client module 28. The navigation client module 28 in turn generates graphic output, and may also generate audio output. The graphic output includes a representation of the route segment on which the vehicle is located and may also include a representation of the vehicle itself. A display driver 30 processes the graphic output and renders the graphic output on the display screen 26. The audio output may include speech, sound effects, or both. Speech output may be generated, for example, as a synthesized rendering of an identifier of the route segment by a text-to-speech module 32. Sound effects may include, for example, chimes or other sounds to alert the user 20 of events such as approaching within a threshold distance of a turn maneuver. Both speech and sound effects are processed by an audio driver 34, which renders the audio output using a speaker 36. The speaker 36 is typically part of a vehicle audio system, but may be implemented as a standalone speaker.

In addition to providing output to the user 20, the user interface module 18 can also receive input from the user 20. For example, the user 20 may "scroll" backward or forward through the sequence of route segments using a keypad 38, a knob 40, or other input device. An input interface 42 provides the input to the navigation client module 28, which makes appropriate changes to the display or audio output according to the input. Further, in some embodiments, the user 20 may interact with the vehicle navigation system 10 by voice commands spoken into a microphone 44. A voice recognition module 46 converts the voice commands to text or another format that can be processed by the vehicle navigation system 10.

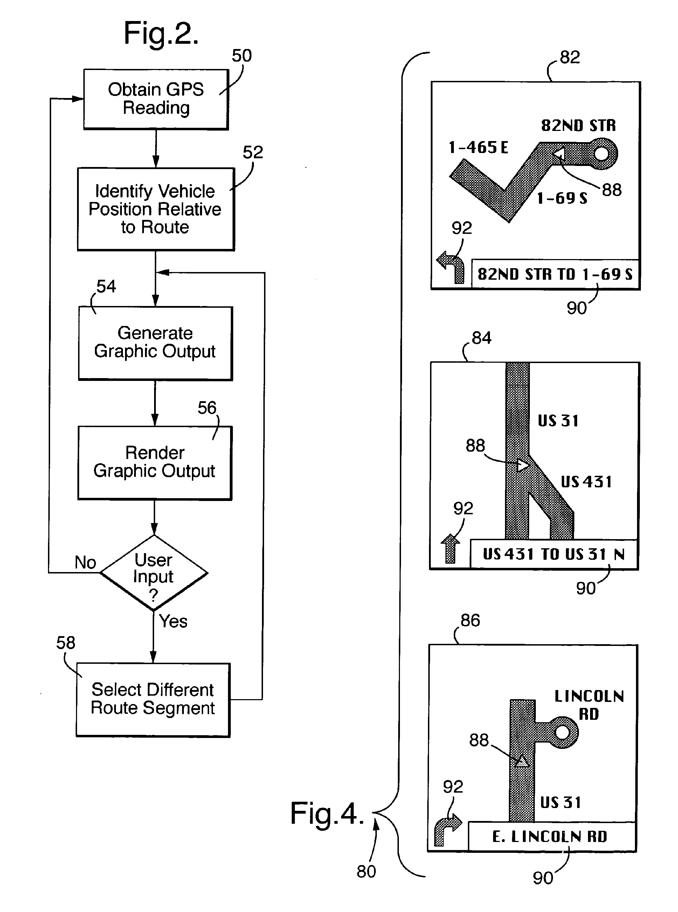

Figure 2 is a flow diagram illustrating an example method executed by the processor 12 of Figure 1 to display a route comprising a sequence of route segments to be traveled by the vehicle. The vehicle position module 14 obtains from the GPS module 22 information relating to the position of the vehicle, including, for example, latitude and longitude readings (50). Based on the latitude and longitude readings and information received in the navigation server module 16 from the database 24, the processor 12 determines the position of the vehicle relative to the route (52). More particularly, the processor 12 identifies the particular route segment of the sequence of route segments on which the vehicle is currently located (52). While not required, the vehicle position module 14 may also determine a heading vector that indicates the direction in which the vehicle is traveling. The vehicle position module 14 may determine the heading vector using any of a variety of conventional techniques. If the vehicle navigation system 10 is operating in an active guidance mode, that is, the navigation system is providing instructions to the user 20, and the vehicle is not on the prescribed route, the vehicle position module 14 may detect that the vehicle is off the prescribed route and notify the operator via an "off-route screen." The "off-route screen" may provide a direct line, or compass, heading vector and point-to-point distance to the desired location, or suggest that the user 20 make the appropriate maneuver or maneuvers to return to the prescribed route. If directions to the prescribed route can not be generated, the vehicle position module 14 may provide directions to the nearest known road or intersection, and from there generate a new list of directions to the desired destination. If the vehicle navigation system 10 is not operating in the active guidance mode, the vehicle navigation 10 provides no further information to the user 20 if the vehicle is off the prescribed route.

After identifying the route segment on which the vehicle is located, the navigation server module 16 executing on the processor 12 provides information regarding the route segment on which the vehicle is located to a navigation client module 28. The navigation client module 28 then generates graphic output (54), and, while not required, optionally also generates audio output. The graphic output includes a representation of the route segment on which the vehicle is located and may also include a representation of the vehicle itself. If included, the representation of the vehicle may be substantially centered relative to the display. In some embodiments, the route segment is rendered in a north-up orientation, that is, with a top edge of the display corresponding to a north cardinal direction. As an alternative, the route segment may be rendered in a forward-up orientation such that the top edge of the display corresponds to a forward direction of travel as indicated by the heading vector.

A display driver 30 processes the graphic output and renders the graphic output (56) on the display screen 26. While not shown in Figure 2, the audio driver 32 may process the audio output and render the audio output via the speaker 26. The audio output may include speech, sound effects, or both. Speech output may include a synthesized rendering of an identifier of the route segment by the text-to-speech module 32. Sound effects may include, for example, chimes or other sounds to alert the user 20 of events such as approaching within a threshold distance of a turn maneuver.

To scroll backward or forward through the sequence of route segments, the user 20 may provide input to the processor 12 via the user interface module 18 executing on the processor 12. The user 20 may provide this input via, for example, the keypad 38, the knob 40, the microphone 44, or other input device. When the user interface module 18 receives input from the user 20, the processor 12 selects a different route segment of the sequence of route segments (58) as a function of the received input and generates graphic output (54) from the selected route segment. The graphic output is then rendered (56) on the display screen 26.

The user input can cause the processor 12 to select a previous route segment or a subsequent route segment, or to return to the route segment on which the vehicle is currently located. For example, if the user 20 provides input via the knob 40, clockwise rotation of the knob 40 may cause the processor 12 to select the subsequent route segment for display. Conversely, counterclockwise rotation of the knob 40 may cause the processor 12 to select the previous route segment. In some embodiments, depressing the knob 40 causes the processor 12 to return to the route segment on which the vehicle is located. Alternatively, the user 20 may provide input via arrow or other keys on the keypad 38 or by using voice commands, such as "PREVIOUS SEGMENT," "NEXT SEGMENT," and "RETURN." Accordingly, the user 20 can step through the sequence of route segments without needing to switch between different frames of reference.

In addition to progressing through the sequence of route segments in response to user input, the processor 12 may also periodically update the route segment display based on movement of the vehicle. For example, even if the user 20 does not provide input, the processor 12 may periodically obtain updated GPS readings (50) and change the route segment display whenever the processor 12 determines that the vehicle has transitioned to a different route segment.

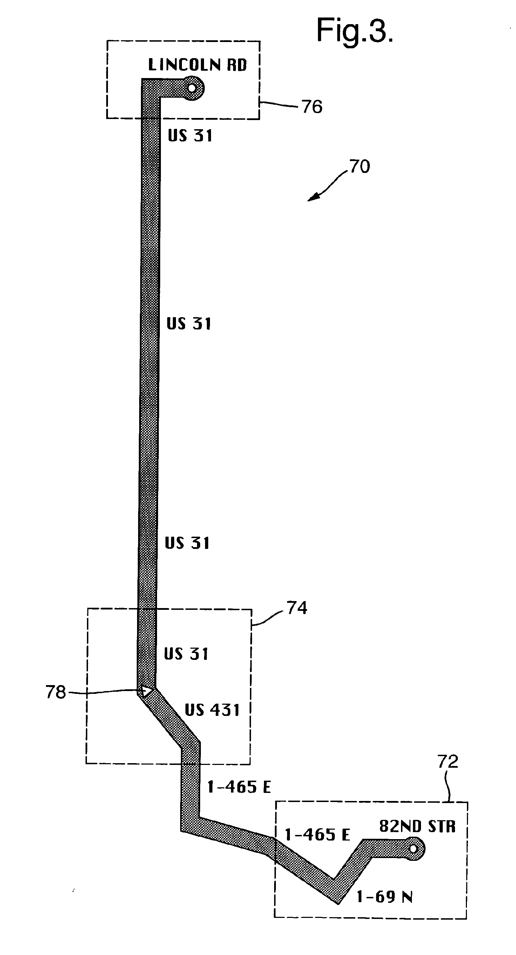

Figure 3 illustrates an example route 70 that can be displayed by the vehicle navigation system 10. As shown in Figure 3, the route 70 includes a number of route segments, some of which are illustrated as route segments 72, 74, and 76. The route segment 72 corresponds to the beginning of the route at 82nd Street. As indicated by an arrowhead 78, the vehicle is currently located on the route segment 74, which corresponds to a junction between U.S. Highways 431 and 31. After traveling on U.S. Highway 31 according to the route, the vehicle will exit on Lincoln Road, as indicated by the route segment 76. In the example illustrated in Figure 3, the route segments are defined relative to turn maneuvers, such as the exit on Lincoln Road. It will be appreciated, however, that the route segments can be defined relative to fixed distances. For example, in some embodiments, the relatively long stretch of U.S. Highway 31 may constitute multiple route segments.

Figure 4 illustrates an example sequence 80 of graphic user interface (GUI) screens that may be presented to the user to display the route depicted in Figure 3. As the vehicle begins on the route segment 72 of Figure 3, the display screen 26 displays a GUI screen 82. By turning the knob 40 clockwise or providing other input, the user 20 can preview the remainder of the route by displaying the GUI screens 84 and 86, which correspond to route segments 74 and 76, respectively, in sequence. In addition, the display can automatically advance to the GUI screens 84 and 86 when the vehicle itself moves to the route segments 74 and 76.

To preserve a common frame of reference across the GUI screens, each GUI screen 82, 84, and 86 incorporates a number of common features. For example, in each screen, an arrowhead 88 or other symbol represents the vehicle. The arrowhead 88 is substantially centered with respect to the display area, with the representation of the route segment dynamically updated to reflect the current position of the vehicle relative to the route segment.

The GUI screens can be displayed in either a north-up orientation or a forward-up orientation. In the north-up orientation shown in Figure 4, the top edge of the display area corresponds to the north cardinal direction. By contrast, in the forward-up orientation, the top edge of the display area corresponds to the forward direction of travel. Different users may prefer different orientations. Accordingly, in some embodiments, the user 20 can select a preferred orientation.

Each GUI screen 82, 84, and 86 includes a legend 90 that identifies the route segment. For example, in the GUI screen 84, the legend 90 identifies the route segment as the junction of U.S. Highways 431 and 31, heading north. The GUI screens may also include a directional indicator 92 to advise the user 20 to turn left or right or to continue in the current direction of travel. Major streets and their names may also be displayed. Minor streets, such as streets not forming part of the route, may either be displayed or omitted. Omitting minor streets from the display may make the display easier to use.

As demonstrated by the foregoing discussion, various implementations may provide certain advantages. Because the navigation system displays the route as a sequence of route segments rather than on an overview map or a combination of an overview map and detailed maps, the user can easily step through the route using a simple control, such as a knob, keypad, or voice commands. As a result, the user can view the entire route easily without having to mentally adjust to different frames of reference, such as between an overview map and a detailed map.

It will be understood by those who practice the invention and those skilled in the art that various modifications and improvements may be made without departing from the spirit and scope of the disclosed embodiments. The scope of protection afforded is to be determined solely by the claims and by the breadth of interpretation allowed by law.

## Claims

1. A method to display a route comprising a sequence of route segments to be traveled by a vehicle, the method comprising:
determining a position of the vehicle;
identifying a route segment on which the vehicle is located as a function of the position of the vehicle;
rendering the identified route segment using a graphic user interface (GUI); and
rendering a different one of the route segments using the GUI in response to a user input.

2. The method of claim 1, further comprising rendering a different one of the route segments using the GUI in response to movement of the vehicle.

3. The method of claim 1, wherein the GUI comprises:
a display area having a top edge; and
a graphic representation of the vehicle rendered within the display area.

4. The method of claim 3, wherein the graphic representation of the vehicle is substantially centered relative to the display area.

5. The method of claim 3, wherein the top edge of the display area is associated with one of a north cardinal direction and a forward direction of travel.

6. The method of claim 1, wherein rendering a different one of the route segments using the GUI in response to the user input comprises rendering at least one of a previous route segment and a subsequent route segment using the GUI.

7. The method of claim 1, further comprising receiving the user input using at least one of a keypad, a knob, and an audio input device.

8. A navigation system for use in a vehicle, the navigation system of the type including a display device and a global positioning system (GPS) receiver configured to determine a position of the vehicle, the navigation system **characterized by**:
a data retrieval device configured to retrieve navigation data from a data storage medium, the navigation data representing a sequence of route segments; and
a processor-based subsystem operatively coupled to the GPS receiver, the data retrieval device, and the display device and configured to determine a position of the vehicle;
identify a route segment on which the vehicle is located as a function of the position of the vehicle;
render the identified route segment using a graphic user interface (GUI); and
render a different one of the route segments using the GUI in response to a user input.

9. The navigation system of claim 8, wherein the processor-based subsystem is further configured to render a different one of the route segments using the GUI in response to movement of the vehicle.

10. The navigation system of claim 8, wherein the GUI comprises:
a display area having a top edge; and
a graphic representation of the vehicle rendered within the display area.

11. The navigation system of claim 10, wherein the graphic representation of the vehicle is substantially centered relative to the display area.

12. The navigation system of claim 10, wherein the top edge of the display area is associated with one of a north cardinal direction and a forward direction of travel.

13. The navigation system of claim 8, wherein rendering a different one of the route segments using the GUI in response to the user input comprises rendering at least one of a previous route segment and a subsequent route segment using the GUI.

14. The navigation system of claim 8, further comprising an input device, the input device comprising at least one of a keypad, a knob, and an audio input device.

15. A processor-readable medium containing processor-executable instructions that, when executed by a processor-based system in a vehicle, cause the processor-based system to:
retrieve route information representing a route comprising a sequence of route segments;
display a graphic representation of the vehicle and a route segment on which the vehicle is located using a graphic user interface (GUI);
receive a user input; and
display one of a previous route segment and a subsequent route segment using the GUI in response to the user input.

16. The processor-readable medium of claim 15, wherein the processor-executable instructions, when executed by the processor-based system, further cause the processor-based system to update the displayed route segment in response to movement of the vehicle.

17. The processor-readable medium of claim 15, wherein the GUI comprises a display area having a top edge.

18. The processor-readable medium of claim 17, wherein the graphic representation of the vehicle is substantially centered relative to the display area.

19. The processor-readable medium of claim 15, wherein the top edge of the display area is associated with one of a north cardinal direction and a forward direction of travel.
